# EUROPEAN PATENT APPLICATION

(11) **EP 2 680 270 A1**
(43) Date of publication of application: **01.01.2014**
(21) Application number: 13163194.7
(22) Date of filing: 10.04.2013
(51) Int. Cl.: G11B 17/22, G11B 15/68, B65G 51/03

(54) **Library device**

(30) Priority: 29.06.2012 JP 2012146490
(71) Applicant: FUJITSU LIMITED, Kawasaki-shi, Kanagawa 211-8588 (JP)
(72) Inventor: Inagaki, Hiroyasu, Kawasaki-shi, Kanagawa 211-8588 (JP)
(74) Representative: Schultes, Stephan

(57) **Abstract**

A library device (1) includes: a mounting unit (40) is adapted to mounted on a plurality of cartridges (10), and to include a top board (41) having ejection holes (42a - 42d), each of the ejection holes ejecting air that moves each cartridge toward the cartridge; an air supplying device (50) is adapted to supply the air to air supply channels (52) connected to the ejection holes, respectively; a plurality of valve devices (53a- 53d) are adapted to permit or intercept ejecting the air from the respective ejection holes; a controller (70) is adapted to open and close each of the valve devices so as to move each cartridge to a desired position; and a drive device (20) is adapted to insert and detach each cartridge on the top board into/from the library device, by using a hand device (30).

## Description

### FIELD

The present invention relates to a library device.

### BACKGROUND

Conventionally, there has been known a library device as an external storage device which is connected to a large computer device and used. The library device houses many cartridges in which a magnetic tape medium has been built, and conveys the cartridges to a drive device by using a carrying mechanism called a robot. The library device performs reading, writing and storing of data to the tape medium with the drive device. When the storage capacity of the library device is made to increase, it is considered to make the storage number of cartridges increase.

Patent document 1 is known as a proposal which makes the storage number of cartridges increase. Patent document 1 discloses a library device that includes: a robot that is arranged on a base plate of a housing and is movable to a depth direction (back and forth directions) and right and left directions of the housing; and a cell shelf that is arranged above a robot in the housing, and that arranges the cartridges side by side.

Patent Document 1: Japanese Laid-open Patent Publication No. 2011-150761.

The robot in the library device disclosed in the above-mentioned Patent document 1 moves to a desired position in the housing, and moves the cartridges. The robot includes many moving units in order to realize complicated movement when the cartridges are moved. However, in such a robot to which oneself moves and which is required for complicated operation, it can be said that the probability of causing a failure by itself is high.

Therefore, it is desirable to provide a library device that reduces possibility of causing a failure associated with conveyance of cartridges.

### SUMMARY

The library device described herein includes: a mounting unit is adapted to mounted on a plurality of cartridges, and to include a top board having ejection holes, each of the ejection holes ejecting air that moves each cartridge toward the cartridge; an air supplying device is adapted to supply the air to air supply channels connected to the ejection holes, respectively; a plurality of valve devices are adapted to permit or intercept ejecting the air from the respective ejection holes; a controller is adapted to open and close each of the valve devices so as to move each cartridge to a desired position; and a drive device is adapted to insert and detach each cartridge on the top board into/from the library device, by using a hand device.

The air is ejected from each of the ejection holes, so that it is possible to float each cartridge from the top board and move the cartridge in a desired direction. Since the library device described herein moves the cartridge by the air, a robot to move the cartridge is unnecessary. As a result, it is possible to reduce possibility of causing a failure associated with conveyance of the cartridges.

According to a library device disclosed herein, it is possible to reduce possibility of causing a failure associated with conveyance of cartridges.

### BRIEF DESCRIPTION OF DRAWINGS

FIG. 1A is a perspective diagram illustrating the external appearance of a library device according to an embodiment;
FIG. 1B is a perspective diagram illustrating the library device in a state where a front door is opened;
FIG. 2 is an explanatory diagram illustrating the inside of the library device according to the embodiment;
FIG. 3 is an explanatory diagram illustrating the inside of the library device in a state where cartridges are housed;
FIG. 4 is an explanatory diagram illustrating a hand unit;
FIG. 5 is an explanatory diagram illustrating schematic configuration of an air supplying device;
FIG. 6 is a block diagram illustrating a control system of the library device according to the embodiment;
FIG. 7 is an explanatory diagram illustrating arrangement of front ejection holes and back ejection holes provided in a second section;
FIG. 8A is an explanatory diagram illustrating a cross-sectional surface taken along a line A-A in FIG. 7;
FIG. 8B is an explanatory diagram illustrating a state where air supply is stopped;
FIG. 8C is an explanatory diagram illustrating a state where the air supply is performed and the air is ejected;
FIG. 9A is an explanatory diagram illustrating a cross-sectional surface taken along a line B-B in FIG. 7;
FIG. 9B is an explanatory diagram illustrating a state where air supply is stopped;
FIG. 9C is an explanatory diagram illustrating a state where the air supply is performed and the air is ejected;
FIG. 10 is an explanatory diagram illustrating arrangement of front ejection holes, back ejection holes, right ejection holes, and left ejection holes provided in a first section;
FIG. 11 is an explanatory diagram illustrating a cross-sectional surface taken along a line E-E in FIG. 10;
FIG. 12 is an explanatory diagram illustrating a cross-sectional surface taken along a line F-F in FIG. 10;
FIG. 13 is an explanatory diagram illustrating a cross-sectional surface taken along a line G-G in FIG. 10;
FIG. 14 is an explanatory diagram illustrating a cross-sectional surface taken along a line H-H in FIG. 10;
FIG. 15 is an explanatory diagram illustrating a state where the cartridges are housed in the library device;
FIG. 16 is an explanatory diagram illustrating a state where the cartridges are housed in the library device;
FIG. 17 is an explanatory diagram illustrating a state where a cartridge sequentially moves on sections;
FIG. 18 is an explanatory diagram illustrating a state where the cartridge sequentially moves on the sections;
FIG. 19 is a table in which the existence or nonexistence of air ejection and an operating state of position detection sensors when the cartridge is moved are summarized;
FIG. 20 is a table in which the existence or nonexistence of air ejection and an operating state of the position sensors when the cartridge is moved are summarized;
FIG. 21 is an explanatory diagram illustrating a state where an arm member is made to extend;
FIG. 22 is an explanatory diagram illustrating a state where the extension of the arm member is completed;
FIG. 23 is an explanatory diagram illustrating a state where a second electromagnetic pin is made to project;
FIG. 24 is an explanatory diagram illustrating a state where the cartridge on a fourth section is moved to an eighth section;
FIG. 25 is an explanatory diagram illustrating a state where the second electromagnetic pin is housed;
FIG. 26 is an explanatory diagram illustrating a state where the arm member is drawn in; and
FIG. 27 is an explanatory diagram illustrating a state where the cartridge has been inserted into a drive device.

### DESCRIPTION OF EMBODIMENTS

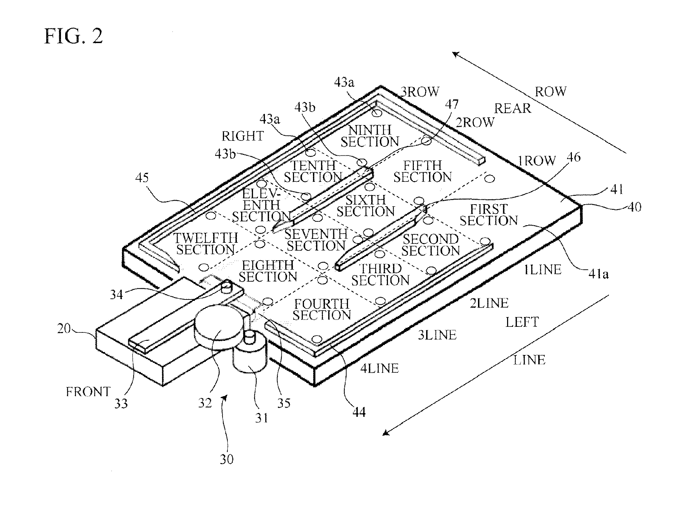

A description will be given of embodiments of the invention, with reference to drawings. It should be noted that a size and ratio of each unit do not correspond to the actual ones in some drawings. Also, components which exist in fact may be omitted for convenience of explanation in some drawings. In the following description, back and forth directions and right and left directions are illustrated in FIG. 2.

### (EMBODIMENT)

### <<whole configuration>>

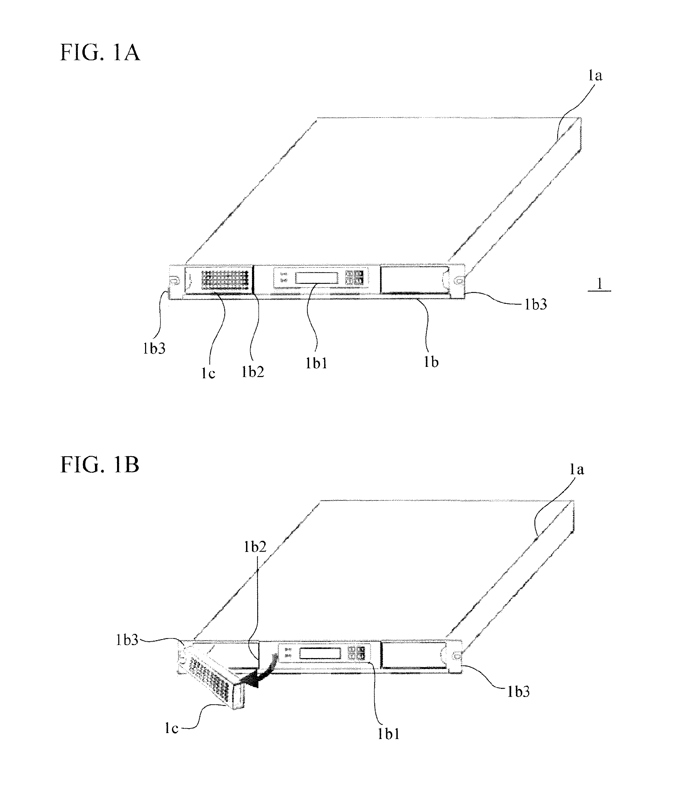

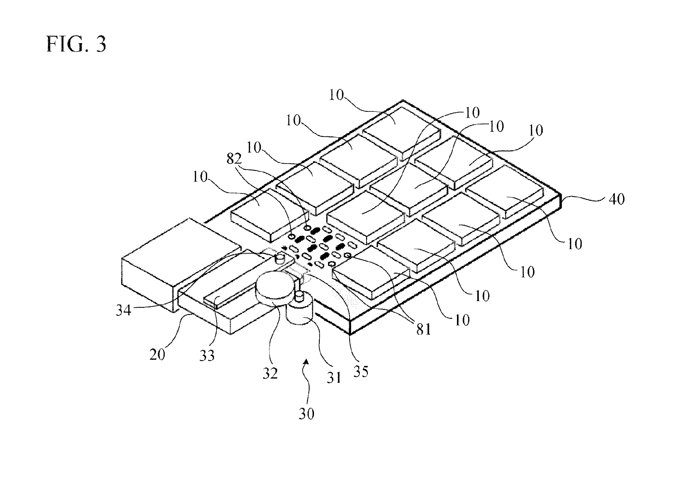

FIG. 1A is a perspective diagram illustrating the external appearance of a library device 1 according to an embodiment. FIG. 1B is a perspective diagram illustrating the library device 1 in a state where a front door 1c is opened. FIG. 2 is an explanatory diagram illustrating the inside of the library device 1 according to the embodiment. FIG. 3 is an explanatory diagram illustrating the inside of the library device 1 in a state where cartridges 10 are housed.

Referring to FIGs. 1A and 1B, the library device 1 is provided with a housing 1a, and a front panel 1b is provided at a front side of the housing 1a. The library device 1 can be mounted in a rack space of 1U (44.45 mm in height). The library device 1 can house the cartridge 10 based on a LTO (Linear Tape-Open) standard. An operation panel 1b1 is attached to the front panel 1b. On the operation panel 1b1, various switches for operating the library device 1 and a display unit are provided. Moreover, on the front panel 1b, a cartridge input port 1b2 is provided. A front door 1c is attached to the cartridge input port 1b2. The cartridge input port 1b2 is opened and closed by the front door 1c. The front door 1c is opened, so that the cartridge can be inserted into the housing 1a and be ejected from the housing 1a. Ear units 1b3 for attaching the library device 1 to a rack are provide at both sides of the front panel 1b

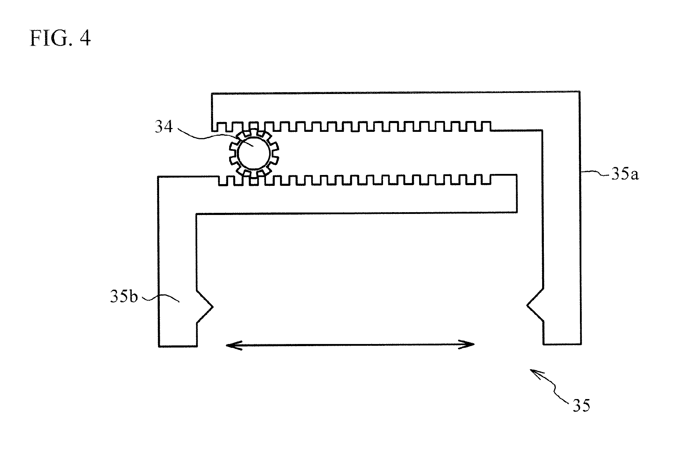

Referring to FIGs. 2 and 3, a drive device 20 and a hand device 30 are provided in the inside of the library device 1. The cartridge 10 is attached, so that the drive device 20 read and write data from/into a magnetic tape medium in which the cartridge 10 builds. The hand device 30 inserts and detaches the cartridge 10 into/from the drive device 20. The hand device 30 includes a first motor 31, a pinion gear 32, and an arm member 33. A rack gear which engages with the pinion gear 32 is provided on a side surface of the arm member 33. Thereby, when the first motor 31 rotates, the arm member 33 goes forward or back via the pinion gear 32 depending on a rotation direction of the first motor 31. The hand device 30 includes a hand unit 35 in a tip side of the arm member 33. Referring to FIG. 4, the hand unit 35 includes a first claw member 35a and a second claw member 35b which are driven by a second motor 34. The first claw member 35a and the second claw member 35b can engage with grooves included in the cartridge 10. When the second motor 34 performs normal rotation, a distance between the first claw member 35a and the second claw member 35b narrows, and the hand unit 35 can sandwich the cartridge 10. When the arm member 33 is activated in a state where the hand unit 35 sandwiches the cartridge 10, the cartridge 10 is inserted into and detached from the drive device 20.

A mounting part 40 which mounts a plurality of cartridges 10 is provided in the inside of the library device 1. A mounting part 40 has a top board 41. The cartridges 10 are mounted on a top surface 41a of the top board 41.

The top board 41 is divided into a plurality of sections. Referring to FIG. 2, the top board 41 is divided into a total of 12 sections which are four lines x three rows. That is, the top board 41 is divided into first to twelfth sections. Referring to FIG. 3, each cartridge 10 is mounted on each section. In response to the total of 12 sections being prepared, the library device 1 can house eleven cartridges 10. That is, the cartridges 10 which are less than the number of whole sections by one section are housed. The reason why the cartridges 10 which are less than the number of whole sections by one section are housed is to secure a movement space of the cartridges 10. That is, the cartridges 10 can be moved one by one by preparing a free space of one section, and hence a desired cartridge 10 can be moved in a desired section.

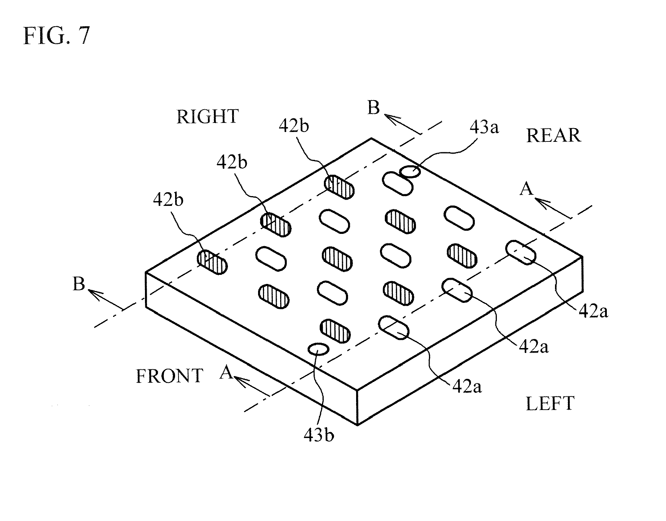

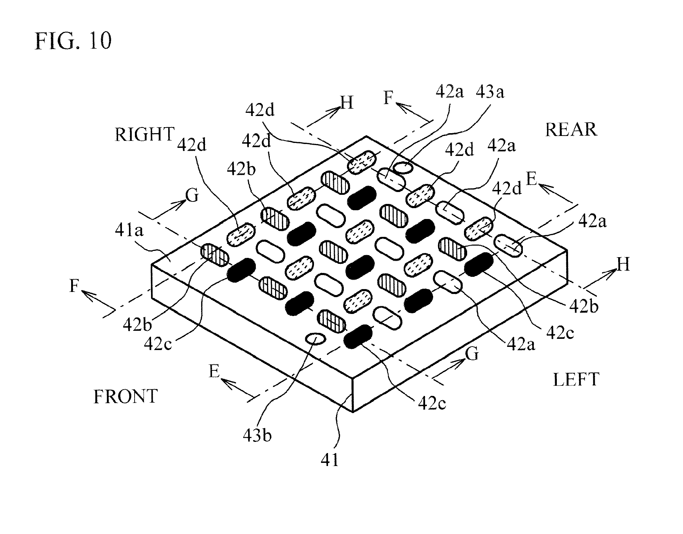

Referring to FIGs. 7 and 10, the top board 41 includes ejection holes 42a to 42d which eject air for moving the cartridge 10 toward the mounted cartridge 10. The air ejected from the ejection holes 42a to 42d floats the cartridge 10 from the top surface 41a and moves the cartridge 10 in a desired direction. A moving direction required for the cartridge 10 differs for every section. Therefore, the ejection holes 42a to 42d are inclined according to the moving direction of the cartridge 10 required for every section. The moving direction which can be required for the cartridge 10 is all four directions of back and forth directions, and right and left directions, as illustrated in FIG. 2. All the sections can be divided into sections in which only the two directions of the back and forth directions are required, and sections in which the four directions of the back and forth directions and the right and left directions are required. The first section, a fourth section, a fifth section, an eighth section, a ninth section, and the twelfth section among the first to twelfth sections are required to move the cartridge 10 in the four directions. Remaining sections are required to move the cartridge 10 in the two directions. In the following description, the ejection holes for moving the cartridge 10 forward is called front ejection holes 42a. The ejection holes for moving the cartridge 10 backward is called back ejection holes 42b. The ejection holes for moving the cartridge 10 rightward is called right ejection holes 42c. The ejection holes for moving the cartridge 10 leftward is called left ejection holes 42d. The front ejection holes 42a, the back ejection holes 42b, the right ejection holes 42c, and the left ejection holes 42d are provided in each section which is required to move the cartridge 10 in the four directions. The front ejection holes 42a and the back ejection holes 42b are provided in each section which is required to move the cartridge 10 in the two directions.

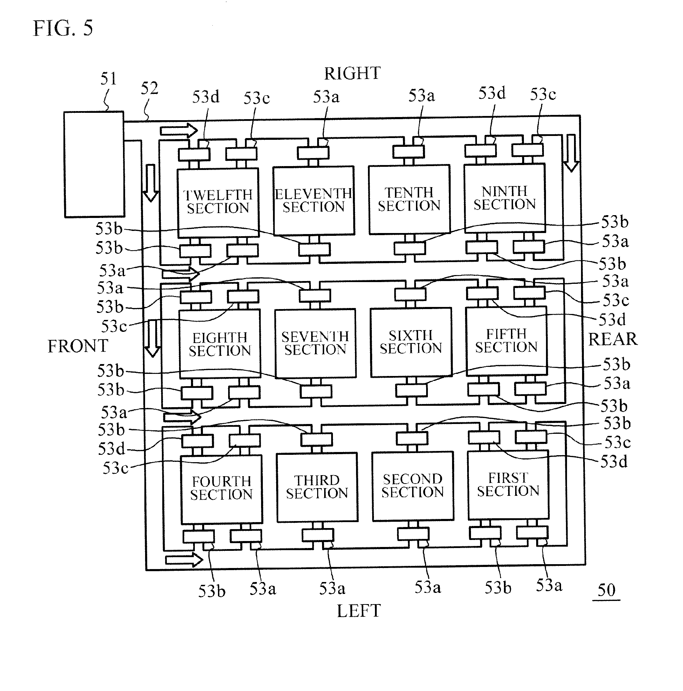

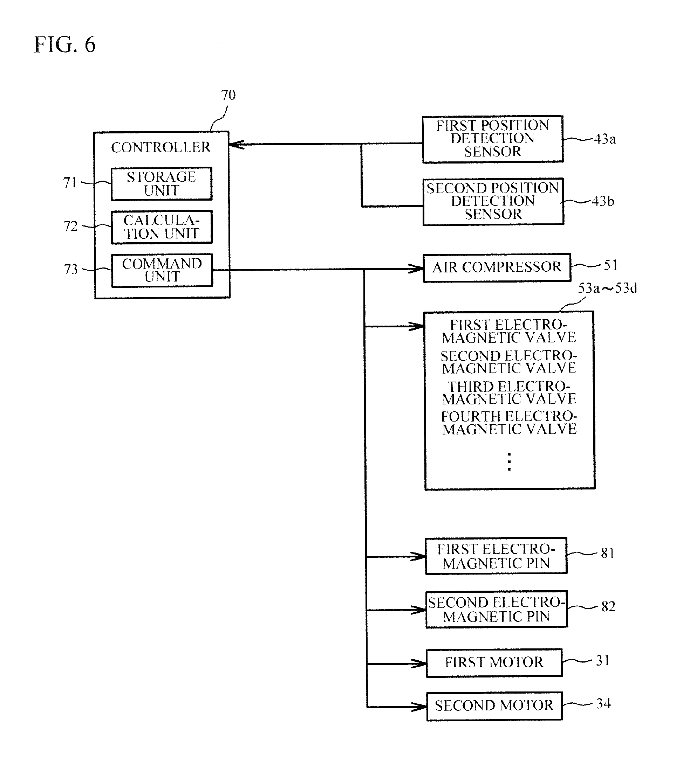

Here, a description will be given of an air supplying device 50 that supplies air to the ejection holes 42a to 42d, with reference to FIGs. 5 and 6. FIG. 5 is an explanatory diagram illustrating schematic configuration of the air supplying device 50. FIG. 6 is a block diagram illustrating a control system of the library device 1 according to the present embodiment. The air supplying device 50 includes an air compressor 51. The air compressor 51 operates based on a command from a command unit 73 included in a controller 70. The air compressor 51 is connected to an air supply channel 52. The air supply channel 52 is arranged in the inside of the mounting part 40, i.e., below the top board 41. The air supply channel 52 branches so as to be connected to each section. Finally, the air supply channel 52 is branched into a number corresponding to the moving directions of the cartridge 10 required in each section, and the branched air supply channels are connected to the ejection holes 42a to 42d provided in each section. That is, the air supply channel 52 are finally branched into four air supply channels, and the four air supply channels are connected to the first section which is required to move the cartridge 10 in the four directions and in which the front ejection holes 42a, the back ejection holes 42b, the right ejection holes 42c, and the left ejection holes 42d are provided. Each section which is required to move the cartridge 10 in the four directions, such as the fourth section and the fifth section, is connected to four branched air supply channels as is the case with the first section. Alternatively, the air supply channel 52 are finally branched into two air supply channels, and the two air supply channels are connected to the second section which is required to move the cartridge 10 in the two directions and in which the front ejection holes 42a and the back ejection holes 42b are provided. Each section which is required to move the cartridge 10 in the two directions, such as the third section and the sixth section, is connected to two branched air supply channels as is the case with the second section.

The air supplying device 50 includes a first electromagnetic valve 53a, a second electromagnetic valve 53b, a third electromagnetic valve 53c, and a fourth electromagnetic valve 53d which are valve devices that permits or intercepts ejecting air from the respective ejection holes 42a to 42d. The first electromagnetic valve 53a to the fourth electromagnetic valve 53d are provided so as to correspond to the ejection holes 42a to 42d. That is, the first electromagnetic valve 53a is provided on the air supply channel 52 branched toward the front ejection holes 42a. The second electromagnetic valve 53b is provided on the air supply channel 52 branched toward the back ejection holes 42b. The third electromagnetic valve 53c is provided on the air supply channel 52 branched toward the right ejection holes 42c. The fourth electromagnetic valve 53d is provided on the air supply channel 52 branched toward the left ejection holes 42d. The first electromagnetic valve 53a to the fourth electromagnetic valve 53d are provided for every section.

Each of the first electromagnetic valve 53a to the fourth electromagnetic valve 53d is electrically connected to the command unit 73 included in the controller 70, opens and closes based on an opening and closing command of the command unit 73, and permits or intercepts ejecting air from corresponding one of the ejection holes 42a to 42d.

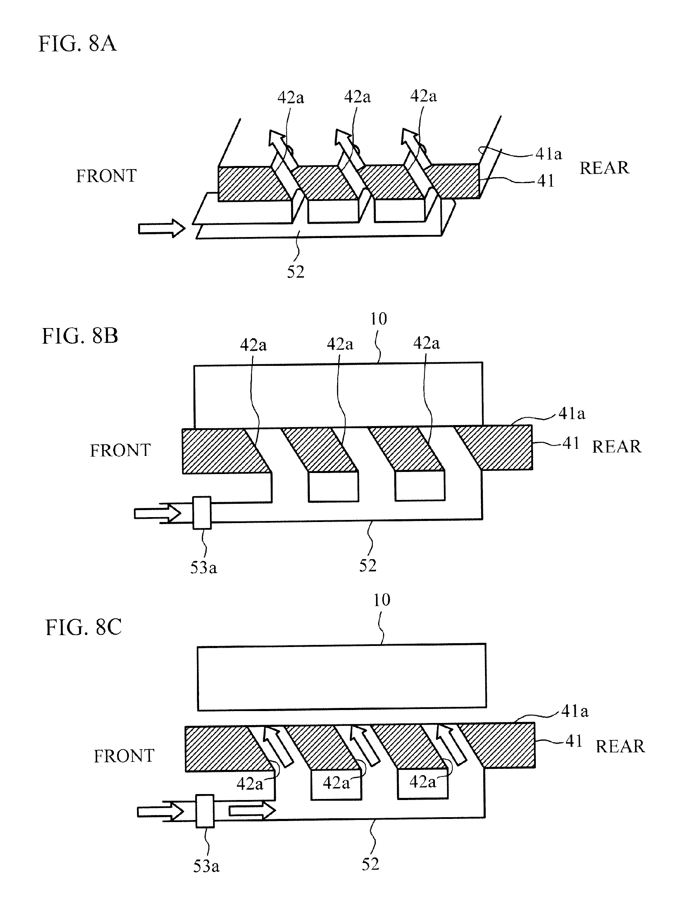

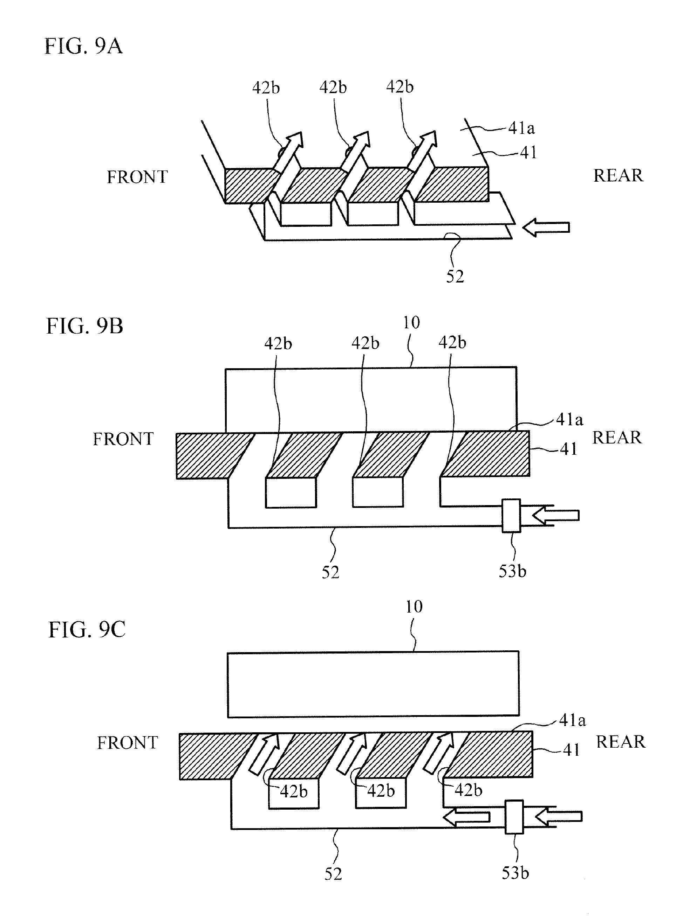

A detailed description will be given of the ejection holes 42a to 42d to which such branched air supply channels 52 are connected. First, a description will be given of the front ejection holes 42a and the back ejection holes 42b provided in the second section, with reference to FIGs. 7, 8A to 8C and 9A to 9C. FIG. 7 is an explanatory diagram illustrating arrangement of the front ejection holes 42a and the back ejection holes 42b provided in the second section. FIG. 8A is an explanatory diagram illustrating a cross-sectional surface taken along a line A-A in FIG. 7. FIG. 8B is an explanatory diagram illustrating a state where air supply is stopped. FIG. 8C is an explanatory diagram illustrating a state where the air supply is performed and the air is ejected. FIG. 9A is an explanatory diagram illustrating a cross-sectional surface taken along a line B-B in FIG. 7. FIG. 9B is an explanatory diagram illustrating a state where air supply is stopped. FIG. 9C is an explanatory diagram illustrating a state where the air supply is performed and the air is ejected. Here, as is the case with the second section, the front ejection holes 42a and the back ejection holes 42b are provided in each section which is required to move the cartridge 10 in only the two directions of the back and forth directions, such as the third section and the sixth section.

Referring to FIG. 7, a plurality of front ejection holes 42a and a plurality of back ejection holes 42b are provided. Each opening of the front ejection holes 42a and the back ejection holes 42b is a rectangle with rounded corners. A longitudinal direction of the rectangle with rounded corners is identical with the right and left directions. The front ejection holes 42a are arranged in a line in the right and left directions, and the back ejection holes 42b are also arranged in a line in the right and left directions. Lows of the front ejection holes 42a and lows of the back ejection holes 42b are alternately arranged in the back and forth directions.

Referring to FIG. 8A, the front ejection holes 42a are inclined in a front direction toward a side of the top surface 41a from a side of a lower surface of the top board 41. FIG. 8B illustrates a state where the first electromagnetic valve 53a is closed, the air supply is stopped, and the cartridge 10 mounted on the top board 41 contacts the top surface 41a. When the first electromagnetic valve 53a is opened from this state, and the air is ejected from the front ejection holes 42a, the cartridge 10 floats from the top surface 41a and moves forward, as illustrated in FIG. 8C.

Referring to FIG. 9A, the back ejection holes 42b are inclined in a rear direction toward the side of the top surface 41a from the side of the lower surface of the top board 41. FIG. 9B illustrates a state where the second electromagnetic valve 53b is closed, the air supply is stopped, and the cartridge 10 mounted on the top board 41 contacts the top surface 41a. When the second electromagnetic valve 53b is opened from this state, and the air is ejected from the back ejection holes 42b, the cartridge 10 floats from the top surface 41a and moves backward, as illustrated in FIG. 9C.

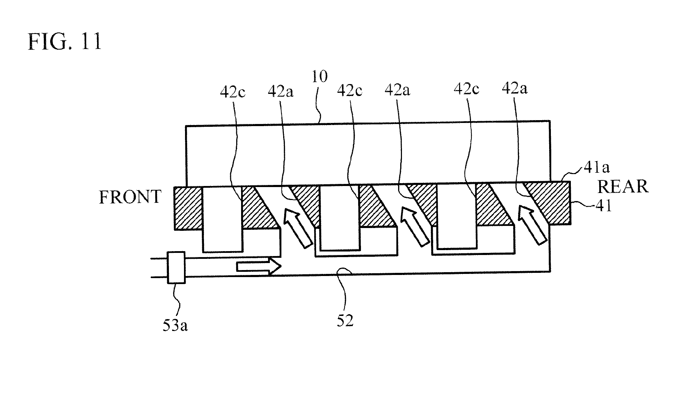

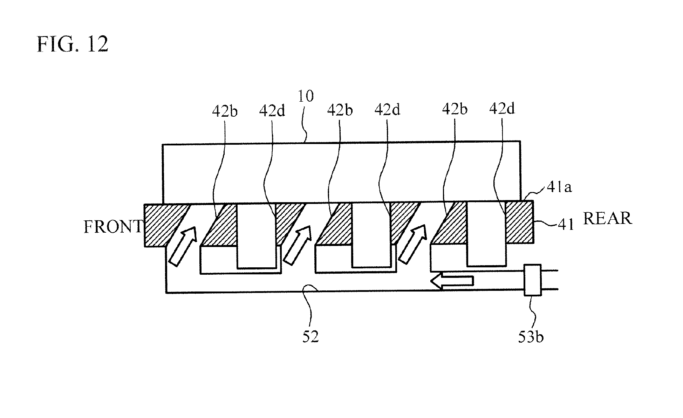

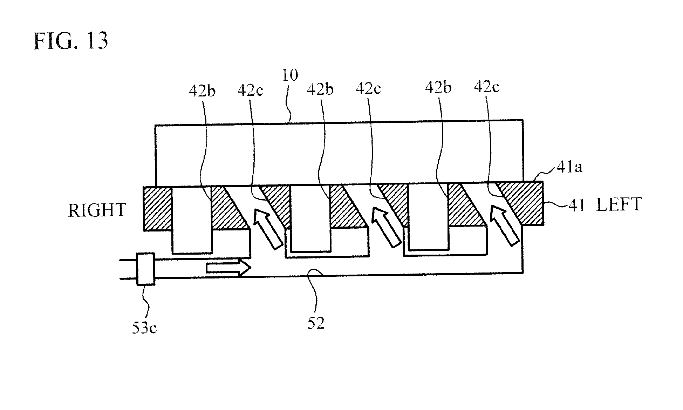

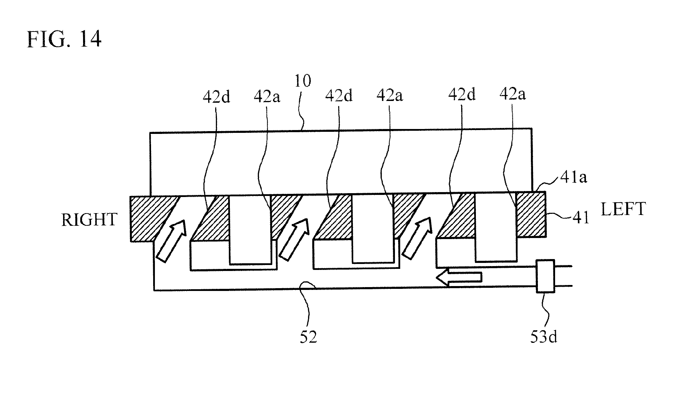

Next, a description will be given of the front ejection holes 42a, the back ejection holes 42b, the right ejection holes 42c, and the left ejection holes 42d which are provided in the first section, with reference to FIGs. 10 to 14. FIG. 10 is an explanatory diagram illustrating arrangement of the front ejection holes 42a, the back ejection holes 42b, the right ejection holes 42c, and the left ejection holes 42d provided in a first section. FIG. 11 is an explanatory diagram illustrating a cross-sectional surface taken along a line E-E in FIG. 10. FIG. 12 is an explanatory diagram illustrating a cross-sectional surface taken along a line F-F in FIG. 10. FIG. 13 is an explanatory diagram illustrating a cross-sectional surface taken along a line G-G in FIG. 10. FIG. 14 is an explanatory diagram illustrating a cross-sectional surface taken along a line H-H in FIG. 10. Here, as is the case with the first section, the front ejection holes 42a, the back ejection holes 42b, the right ejection holes 42c, and the left ejection holes 42d are provided in each section which is required to move the cartridge 10 in the four directions of the back and forth directions, and the right and left directions, such as the fourth section and the fifth section.

Referring to FIG. 10, the first section includes the front ejection holes 42a and the back ejection holes 42b as is the case with the second section. Each opening of the front ejection holes 42a and the back ejection holes 42b is a rectangle with rounded corners. A longitudinal direction of the rectangle with rounded corners is identical with the right and left directions. The front ejection holes 42a are arranged in a line in the right and left directions, and the back ejection holes 42b are also arranged in a line in the right and left directions. Lows of the front ejection holes 42a and lows of the back ejection holes 42b are alternately arranged in the back and forth directions. The first section includes the right ejection holes 42c, and the left ejection holes 42d in addition to the front ejection holes 42a and the back ejection holes 42b. Each opening of the right ejection holes 42c and the left ejection holes 42d is a rectangle with rounded corners. A longitudinal direction of the rectangle with rounded corners is identical with the back and forth directions. The right ejection holes 42c are arranged in a line in back and forth directions, and the left ejection holes 42d are arranged in a line in back and forth directions. Lows of the right ejection holes 42c and lows of the left ejection holes 42d are alternately arranged in the right and left directions.

Referring to FIG. 11, the front ejection holes 42a are inclined in the front direction toward the side of the top surface 41a from the side of the lower surface of the top board 41. Referring to FIG. 12, the back ejection holes 42b are inclined in the rear direction toward the side of the top surface 41a from the side of the lower surface of the top board 41. Referring to FIG. 13, the right ejection holes 42c are inclined in the right direction toward the side of the top surface 41a from the side of the lower surface of the top board 41. Referring to FIG. 14, the left ejection holes 42d are inclined in the left direction toward the side of the top surface 41a from the side of the lower surface of the top board 41. Here, in FIGs. 13 and 14, due to a direction in which the cross-sectional surface is observed, a right side of the top board 41 is located at a left side in the drawings, and a left side of the top board 41 is located at a right side in the drawings.

As described above, the plurality of ejection holes are inclined in different directions. Thereby, the cartridge 10 can be moved in a desired direction.

Referring to FIGs. 2, 6, 7, and 10, the library device 1 is equipped with a first position detection sensor 43a and a second detection sensor 43b which detect the position of the cartridge 10 for each section. Referring to FIG. 6, both of the first position detection sensor 43a and the second detection sensor 43b are electrically connected to the controller 70. The controller 70 opens and closes the first electromagnetic valve 53a to the fourth electromagnetic valve 53d as the valve devices, based on the output of the first position detection sensor 43 a and the second detection sensor 43b, and moves the cartridge 10 on the top board 41.

The first position detection sensor 43a and the second detection sensor 43b are provided on diagonal domains in a corresponding section, for each section. Specifically, in the present embodiment, the first position detection sensor 43a is provided on a domain on a right rear side, and the second detection sensor 43b is provided on a domain on a left front side. The two position detection sensors are arranged in this way, so that the position and the moving direction of the cartridge 10 are immediately detectable. If the position detection sensor is arranged in the vicinity of the center of the section, the position detection sensor cannot detect the cartridge 10 when the cartridge 10 does not reach the vicinity of the center of the section. On the contrary, when the two position detection sensors are arranged on the diagonal, the position and the moving direction of the cartridge 10 can be grasped even if the cartridge 10 has been moved from any of front and rear, and right and left. It should be noted that the two position detection sensors may be diagonally arranged on domains on a left rear side and a right front side.

Referring to FIG. 2, the library device 1 is equipped with a first frame body 44 and a second frame body 45 on the mounting part 40. Also, a first guide member 46 is provided between the second and the third sections, and the sixth and the seventh sections. Moreover, a second guide member 47 is provided between the tenth and the eleventh sections, and the sixth and the seventh sections. These members serve as a guide for adequately moving the cartridge 10 to an adjoining section. Moreover, these members can adjust the posture of the cartridge 10 like restraining inclination occurrence of the cartridge at the time of movement of the cartridge 10. Here, in FIG. 3, the first frame body 44, the second frame body 45, the first guide member 46, and the second guide member 47 are omitted.

Next, referring to FIGs. 3 and 6, the library device 1 is equipped with a first electromagnetic pin 81 and a second electromagnetic pin 82. The first electromagnetic pin 81 is provided in the left side of the eighth section so that the first electromagnetic pin 81 can be projected from the top board 41. The second electromagnetic pin 82 is provided in the right side of the eighth section so that the second electromagnetic pin 82 can be projected from the top board 41. The eighth section is a so-called pickup area for inserting the cartridge 10 into the drive device 20 by using the hand device 30, or for detaching the cartridge 10 from the drive device 20 by using the hand device 30. Therefore, it is required that the cartridge 10 on the eighth section is mounted on the top board 41 with good posture. Accordingly, when the cartridge 10 is moved from the fourth section that is adjacent to the left side of the eighth section, the second electromagnetic pin 82 is made to project. Thereby, the cartridge 10 can stop in a state where the cartridge 10 is positioned on the eighth section, and the cartridge 10 can be easily held by the hand device 30. When the cartridge 10 is moved from the twelfth section that is adjacent to the right side of the eighth section, the first electromagnetic pin 81 is made to project. Thereby, the cartridge 10 can stop in the state where the cartridge 10 is positioned on the eighth section, and the cartridge 10 can be easily held by the hand device 30. The controller 70 sinks the first electromagnetic pin 81 and the second electromagnetic pin 82 into the top board 41, when positioning of the cartridge 10 on the eighth section is unnecessary.

### <<Initial State>>

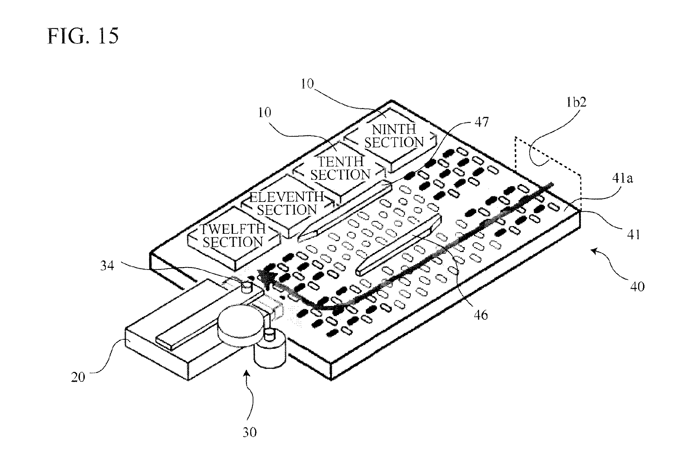

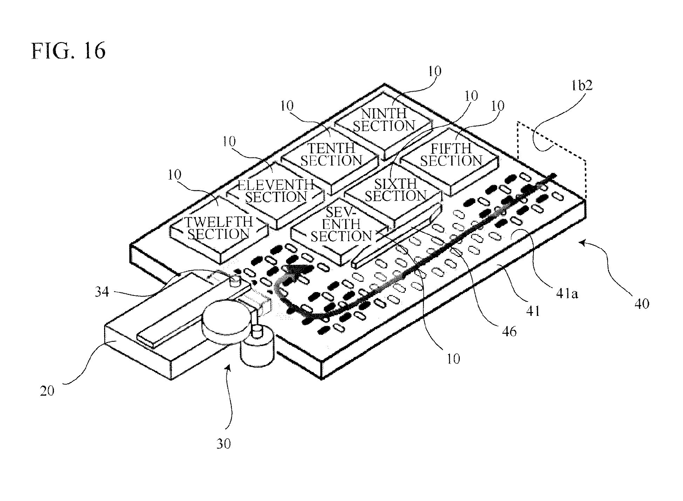

A description will be given of a state where the cartridges 10 are housed in the library device 1 having no cartridges 10 and the library device 1 becomes an initial state, with reference to FIGs. 15 and 16. FIGs. 15 and 16 is explanatory diagrams illustrating a state where the cartridges 10 are housed in the library device 1.

Referring to FIG. 15, the cartridge input port 1b2 is located in the rear side of the first section. In the present embodiment, the cartridges 10 are housed in order of the ninth section, the tenth section, the eleventh section, and the twelfth section.

Referring to FIG. 16, then, the cartridges 10 are housed in order of the fifth section, the sixth section, and the seventh section. The library device 1 creates the map data of the initial state. The created map data is stored into a storage unit 71 in the controller 70. That is, position information in which the cartridge 10 inputted first is located on the ninth section, and the cartridge 10 inputted secondly is located on the tenth section is created as a map. Every time the cartridge 10 moves, data on the map of the initial state is updated, and it is always stored into the map which cartridge is located on which section.

Thus, the storage unit 71 stores the position information in which each cartridge 10 and each section are associated with each other, and stores the updated position information every time the cartridge 10 moves.

### <<Example of Cartridge Conveyance>>

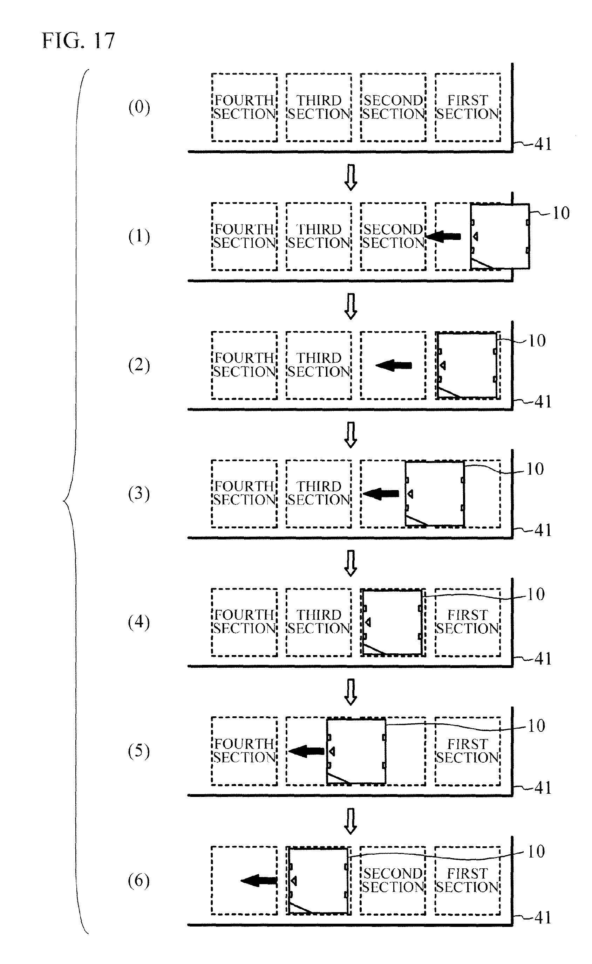

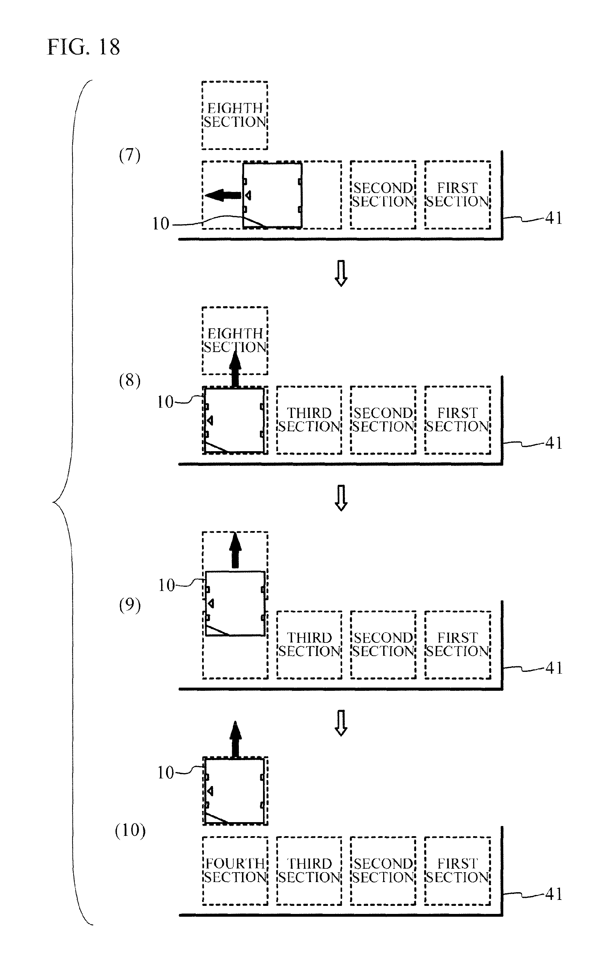

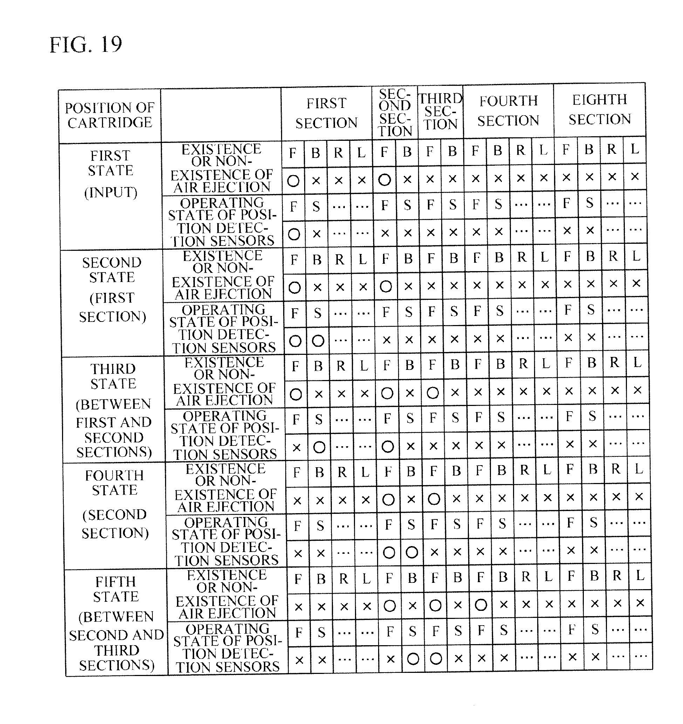

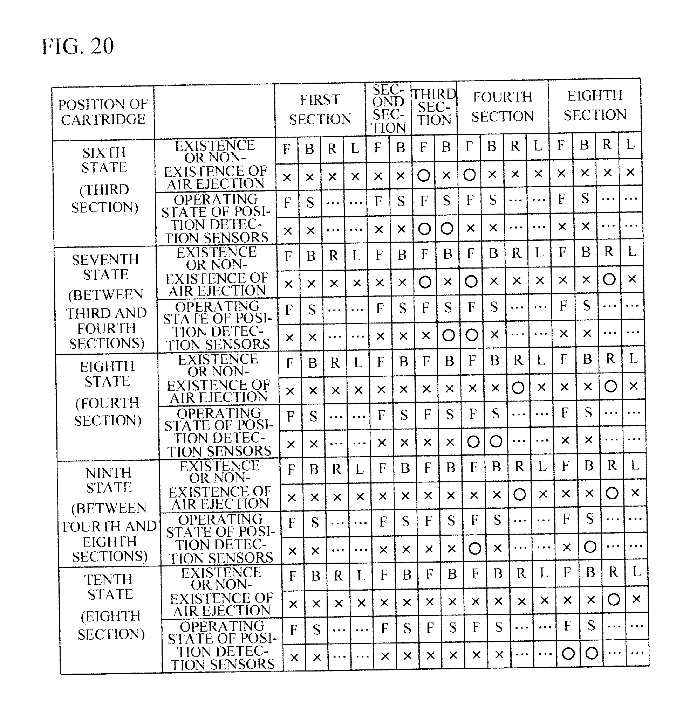

Here, a description will be given of an example of conveyance of the cartridge 10 along with existence or nonexistence of the air ejection of each section and an operating state of the position detection sensors, with reference to FIGs. 17 to 20. Here, a description will be given of a state where the cartridge 10 is inputted from the cartridge input port 1b2 and is conveyed from the first section to the eighth section. FIGs. 17 and 18 are explanatory diagrams illustrating a state where a cartridge sequentially moves on the sections. FIGs. 17 and 18 are divided into two for convenience of representation of the drawings, but FIGs.17 and 18 are continuous drawings. FIGs. 19 and 20 are a table in which the existence or nonexistence of the air ejection and the operating state of position detection sensors when the cartridge is moved are summarized. FIGs. 19 and 20 are divided into two for convenience of representation of the drawings, but FIGs.19 and 20 are continuous drawings. Symbols of (1) to (10) in FIGs. 17 and 18 correspond to "first state" to "tenth state" in FIGs.19 and 20, respectively.

In FIGs. 19 and 20, a symbol "F" in a field of the existence or nonexistence of the air ejection indicates the front ejection holes 42a, and a symbol "B" indicates the back ejection holes 42b. Also, a symbol "R" indicates the right ejection holes 42c, and a symbol "L" indicates the left ejection holes 42d. Moreover, a symbol "F" in a field of the operating state of position detection sensors indicates the first position detection sensor 43a, and a symbol "S" indicates the second position detection sensor 43b.

In FIG. 17, the symbol "(0)" illustrates a state of the library device 1 before the cartridge 10 is inputted. When the cartridge 10 is inputted from this state, the library device 1 becomes a first state (1). In the first state (1), the first position detection sensor 43a detects the cartridge 10. A calculation unit 72 in the controller 70 calculates which electromagnetic valve is activated. In this state, only the first position detection sensor 43a in the first section detects the cartridge 10, and hence the calculation unit 72 judges that the cartridge 10 is inputted from the cartridge input port 1b2. If the cartridge 10 is moved from the fifth section, the second position detection sensor 43b in the fifth section also detects the cartridge 10 along with the first position detection sensor 43a in the first section, and hence the movement of the cartridge 10 from the fifth section is distinguishable from the above-mentioned first state. The command unit 73 opens the first electromagnetic valve 53a connected to the first section in order to eject the air from the front ejection holes 42a, based on a calculation result of the storage unit 71. Thereby, the cartridge 10 is moved forward by the air ejected from the front ejection holes 42a in the first section. At this time, the command unit 73 opens the first electromagnetic valve 53a connected to the second section in order to also eject the air from the front ejection holes 42a in the second section. Thereby, the second section becomes a preparatory state where the cartridge 10 is moved, and the cartridge 10 can be moved from the first section to the second section smoothly.

Next, the library device 1 makes the transition to the second state (2). The second state (2) is in a state where the cartridge 10 is perfectly mounted on the first section. In the second state (2), the first position detection sensor 43a and the second position detection sensor 43b in the first section detect the cartridge 10. In this state, the air is ejected from the front ejection holes 42a in the first section and the front ejection holes 42a in the second section, as is the case with the first state (1).

Next, the library device 1 makes the transition to the third state (3). The third state (3) is in a state where the cartridge 10 is located between the first section and the second section. In the third state (3), the second position detection sensor 43b in the first section and the first position detection sensor 43a in the second section detect the cartridge 10. In this state, the air is ejected from the front ejection holes 42a in the first section and the front ejection holes 42a in the second section, as is the case with the first state (1). At this time, the command unit 73 opens the first electromagnetic valve 53a connected to the third section in order to also eject the air from the front ejection holes 42a in the third section. Thereby, the third section becomes a preparatory state where the cartridge 10 is moved, and the cartridge 10 can be moved from the second section to the third section smoothly.

Next, the library device 1 makes the transition to the fourth state (4). The fourth state (4) is in a state where the cartridge 10 is perfectly mounted on the second section. In the fourth state (4), the first position detection sensor 43a and the second position detection sensor 43b in the second section detect the cartridge 10. In this state, the air ejection from the front ejection holes 42a in the first section is stopped, and the air is ejected from the front ejection holes 42a in the second section and the front ejection holes 42a in the third section.

Next, the library device 1 makes the transition to the fifth state (5). The fifth state (5) is in a state where the cartridge 10 is located between the second section and the third section. In the fifth state (5), the second position detection sensor 43b in the second section and the first position detection sensor 43a in the third section detect the cartridge 10. In this state, the air is ejected from the front ejection holes 42a in the second section and the front ejection holes 42a in the third section, as is the case with the fourth state (4). At this time, the command unit 73 opens the first electromagnetic valve 53a connected to the fourth section in order to also eject the air from the front ejection holes 42a in the fourth section. Thereby, the fourth section becomes a preparatory state where the cartridge 10 is moved, and the cartridge 10 can be moved from the third section to the fourth section smoothly.

Next, the library device 1 makes the transition to the sixth state (6). The sixth state (6) is in a state where the cartridge 10 is perfectly mounted on the third section. In the sixth state (6), the first position detection sensor 43a and the second position detection sensor 43b in the third section detect the cartridge 10. In this state, the air ejection from the front ejection holes 42a in the second section is stopped, and the air is ejected from the front ejection holes 42a in the third section and the front ejection holes 42a in the fourth section.

Next, the library device 1 makes the transition to the seventh state (7). The seventh state (7) is in a state where the cartridge 10 is located between the third section and the fourth section. In the seventh state (7), the second position detection sensor 43b in the third section and the first position detection sensor 43a in the fourth section detect the cartridge 10. In this state, the air is ejected from the front ejection holes 42a in the third section and the front ejection holes 42a in the fourth section, as is the case with the sixth state (6). At this time, the command unit 73 opens the third electromagnetic valve 53c connected to the eighth section in order to also eject the air from the right ejection holes 42c in the eighth section. Thereby, the eighth section becomes a preparatory state where the cartridge 10 is moved, and the cartridge 10 can be moved from the fourth section to the eighth section smoothly.

Next, the library device 1 makes the transition to the eighth state (8). The eighth state (8) is in a state where the cartridge 10 is perfectly mounted on the fourth section. In the eighth state (8), the first position detection sensor 43a and the second position detection sensor 43b in the fourth section detect the cartridge 10. In this state, the air ejection from the front ejection holes 42a in the third section is stopped, and the air is ejected from the right ejection holes 42c in the fourth section and the right ejection holes 42c in the eighth section. That is, in the fourth section, the air ejection from the front ejection holes 42a is stopped, and alternatively, the air ejection from the right ejection holes 42c is begun. This is because the cartridge 10 moves in the right direction after this.

Next, the library device 1 makes the transition to the ninth state (9). The ninth state (9) is in a state where the cartridge 10 is located between the fourth section and the eighth section. In the ninth state (9), the first position detection sensor 43a in the fourth section and the second position detection sensor 43b in the eighth section detect the cartridge 10. In this state, the air is ejected from the right ejection holes 42c in the fourth section and the right ejection holes 42c in the eighth section, as is the case with the eighth state (8).

Next, the library device 1 makes the transition to the tenth state (10). The tenth state (10) is in a state where the cartridge 10 is perfectly mounted on the eighth section. In the tenth state (10), the first position detection sensor 43a and the second position detection sensor 43b in the eighth section detect the cartridge 10. In this state, the air ejection from the right ejection holes 42c in the fourth section is stopped, and the air is ejected from the right ejection holes 42c in the eighth section. Here, FIG. 18 illustrates a state before the cartridge 10 is moved to the eighth section. When the cartridge 10 is further moved afterward, movement control is performed in the same way.

Thus, in the movement of the cartridge 10, the ejection holes for ejecting the air are selected based on the output of the position detection sensors. In addition, every time the cartridge 10 is moved, the position information is updated and the map is rewritten.

### <<Insertion and Detachment of Cartridge into/from Drive Device>>

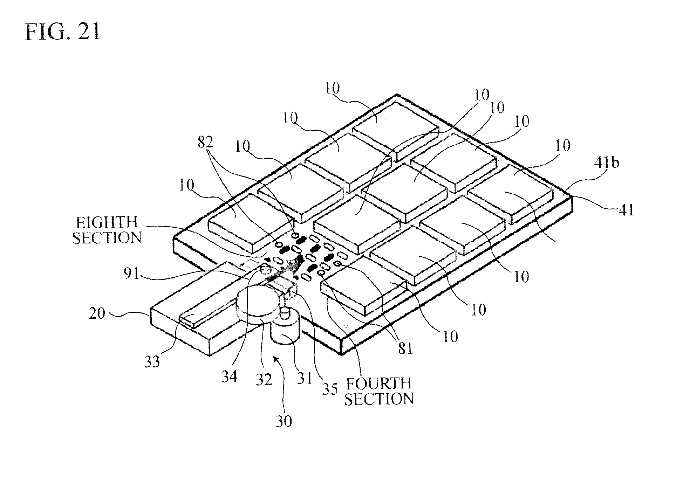

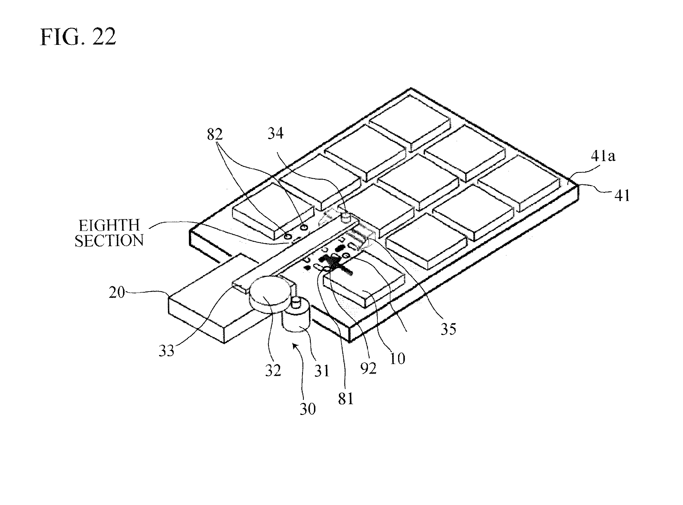

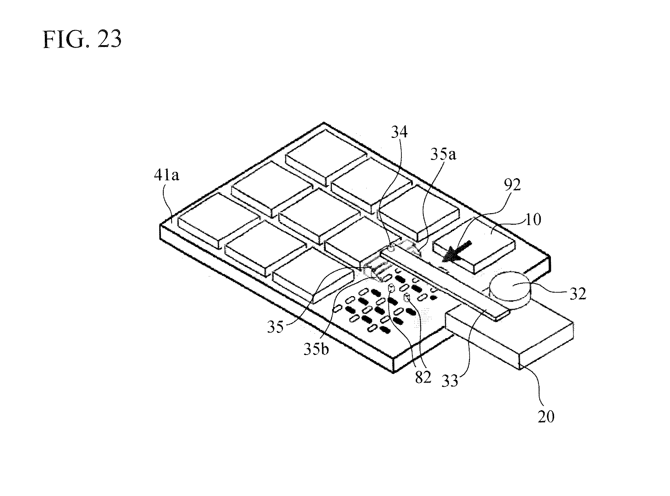

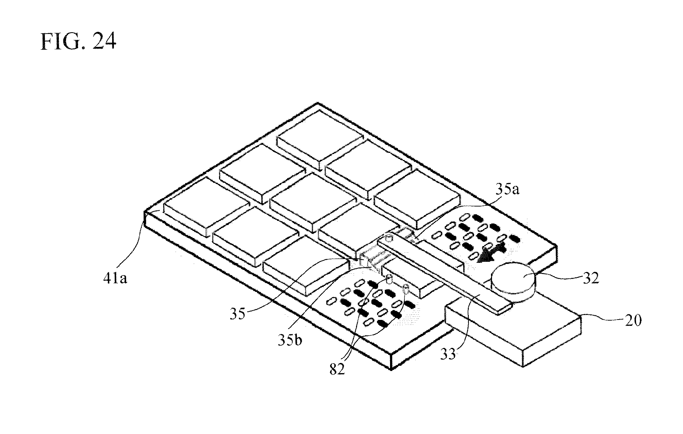

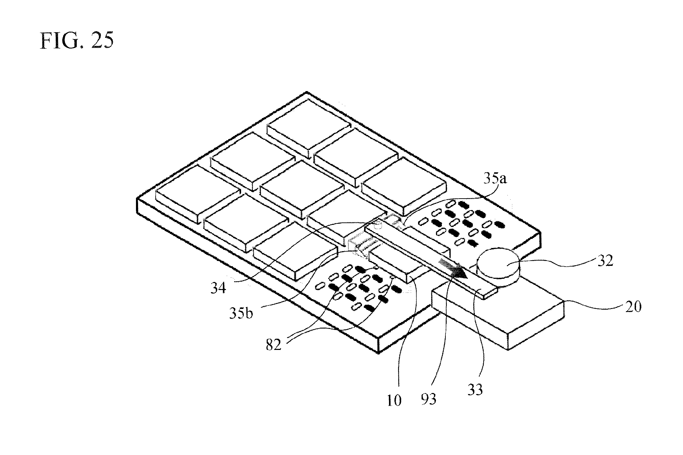

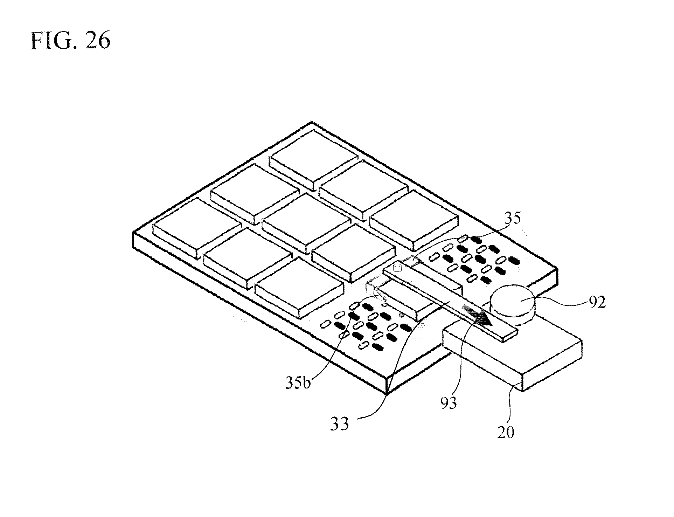

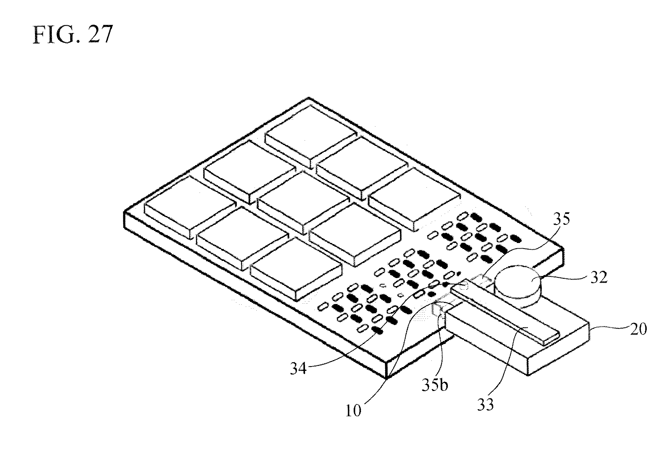

Next, a description will be given of insertion and detachment of the cartridge 10 into/from the drive device 20 in the library device 1, with reference to FIGs. 21 to 27. FIG. 21 is an explanatory diagram illustrating a state where the arm member 33 is made to extend. FIG. 22 is an explanatory diagram illustrating a state where the extension of the arm member 33 is completed. FIG. 23 is an explanatory diagram illustrating a state where the second electromagnetic pin 82 is made to project. FIG. 24 is an explanatory diagram illustrating a state where the cartridge 10 on the fourth section is moved to the eighth section. FIG. 25 is an explanatory diagram illustrating a state where the second electromagnetic pin 82 is housed. FIG. 26 is an explanatory diagram illustrating a state where the arm member 33 is drawn in. FIG. 27 is an explanatory diagram illustrating a state where the cartridge 10 has been inserted into the drive device 20.

Here, a description will be given of a state where the cartridge 10 mounted on the fourth section is inserted into the drive device 20. The cartridge 10 which serves as an insertion target is stood by on the fourth section beforehand. The controller 70 sequentially moves the cartridges 10 in order to prepare the cartridge 10 serving as the insertion target on the fourth section. The library device 1 has a total of the 12 sections, but eleven cartridges 10 are housed in the library device 1. Therefore, the target cartridge 10 can be moved until the fourth section by using the free space of one section.

Here, referring to FIGs. 21 and 22, the controller 70 drives the first motor 31 in a state where the eighth section is opened, and extends the arm member 33 as illustrated by an arrow 91. Then, the controller 70 drives the second motor 34 to expand a distance between the first claw member 35a and the second claw member 35b of the hand unit 35.

Next, referring to FIG. 23, the controller 70 makes the second electromagnetic pin 82. Thereby, the cartridge 10 which is moved from the fourth section to the eighth section can be positioned, as illustrated by an arrow 92. Next, referring to FIG. 24, the controller 70 moves the cartridge 10 located on the fourth section. At this time, the cartridge 10 is positioned by the second electromagnetic pin 82.

Next, referring to FIG. 25, the controller 70 houses the second electromagnetic pin 82, and drives the first motor 31 to draw in the arm member 33. The arm member 33 is drawn in, so that the hand unit 35 moves to a position where the cartridge 10 can be sandwiched. Then, the controller 70 drives the second motor 34 to sandwich the cartridge 10 by using the first claw member 35a and the second claw member 35b of the hand unit 35.

Next, referring to FIG. 26, the controller 70 drives the first motor 31 to further draw in the arm member 33 in a direction indicated by an arrow 93. Thereby, the cartridge 10 is inserted into the drive device 20, as illustrated in FIG. 27. Thereby, the drive device 20 can read and write data from/into the inserted cartridge 10.

Here, when procedures reverse to the above-mentioned procedures are performed, the cartridge 10 inserted into the drive device 20 can be taken out.

As described above, the library device 1 according to the embodiment, can convey the cartridge 10 without using a robot. That is, it is possible to reduce possibility of causing a failure associated with conveyance of cartridges by using the air supplying device 50 having few mechanical moving unit.

Although the embodiment of the present invention is described in detail, the present invention is not limited to the specifically described embodiments and variations but other embodiments and variations may be made without departing from the scope of the claimed invention.

For example, the library device 1 can arrange the cartridges 10 at 4 lines x 3 rows, but may arrange the cartridges 10 at 4 lines x 4 rows. In this case, the library device 1 can store up to fifteen cartridges 10.

## Claims

1. A library device comprising:
a mounting unit is adapted to mounted on a plurality of cartridges, and to include a top board having ejection holes, each of the ejection holes ejecting air that moves each cartridge toward the cartridge;
an air supplying device is adapted to supply the air to air supply channels connected to the ejection holes, respectively;
a plurality of valve devices are adapted to permit or intercept ejecting the air from the respective ejection holes;
a controller is adapted to open and close each of the valve devices so as to move each cartridge to a desired position; and
a drive device is adapted to insert and detach each cartridge on the top board into/from the library device, by using a hand device.

2. The library device as claimed in claim 1, wherein the top board is divided into a plurality of sections.

3. The library device as claimed in claim 2, wherein the ejection holes are inclined according to a moving direction of each cartridge demanded for every section.

4. The library device as claimed in claim 2 or 3, wherein the ejection holes having different inclined directions are provided on each of the sections.

5. The library device as claimed in any one of claims 2 to 4, wherein the top board includes position detection sensors that detect a position of each cartridge for every section, and
the controller opens and closes the valve devices based on output of the position detection sensors, and moves each cartridge on the top board.

6. The library device as claimed in claim 5, wherein the position detection sensors are provided on diagonal domains in a section, for every section.

7. The library device as claimed in any one of claims 2 to 6, further comprising a storage unit adapted to store position information in which each cartridge and each section are associated with each other, and to store updated position information every time each cartridge moves.
